# FASCICULE DE BREVET EUROPEEN

(11) **EP 3 464 679 B1**
(45) Date de publication et mention de la délivrance du brevet: **09.08.2023**
(21) Numéro de dépôt: 17733879.5
(22) Date de dépôt: 24.05.2017
(51) Int. Cl.: C23C 18/06, B44C 1/22, B23K 26/08, B05D 5/06, C03C 17/00, C23C 18/12, C03C 17/04, B23K 26/00, B23K 26/0622, B23K 26/10, B23K 26/12, B23K 26/352, B23K 26/70, B05D 3/06, B05D 7/22

(54) **PROCEDE, DISPOSITIF DE MARQUAGE D'AU MOINS UNE FACE INTERNE D'UN RECIPIENT, ET RECIPIENT CORRESPONDANT**
VERFAHREN UND VORRICHTUNG ZUR MARKIERUNG VON WENIGSTENS EINER INNENFLÄCHE EINES BEHÄLTERS UND ENTSPRECHENDER BEHÄLTER
METHOD AND DEVICE FOR MARKING AT LEAST ONE INNER FACE OF A CONTAINER, AND CORRESPONDING CONTAINER

(30) Priorité: 26.05.2016 FR 1654718
(43) Date de publication de la demande: 10.04.2019
(73) Titulaire: Glass Surface Technology, 75015 Paris (FR)
(72) Inventeur: WAGNER, Christophe, 87320 Bussiere-Poitevine (FR); BAUVIN, Antoine, 87100 Limoges (FR)
(74) Mandataire: Benech, Frédéric
(86) Numéro de dépôt international: PCT/FR2017/051311
(87) Numéro de publication internationale: WO 2017/203183

(56) Documents cités:
- WO-A1-2010/084291
- WO-A1-2011/117515
- WO-A1-2011/131911
- FR-A1- 2 939 615
- US-A- 4 731 254
- US-A1- 2005 218 126
- US-A1- 2011 039 038

## Description

La présente invention concerne un procédé de marquage d'au moins une face interne d'un récipient muni d'un fond et d'une ouverture (pot, flacon...), dans lequel on recouvre intérieurement au moins une partie de la face interne d'un revêtement sol gel.

L'invention concerne également un procédé de marquage simultané de plusieurs faces du récipient.

Elle concerne aussi un dispositif mettant en œuvre un tel procédé de marquage, ainsi qu'un récipient marqué sur au moins une partie interne d'au moins une de ses parois.

Par procédé de marquage, on entend un procédé permettant de faire apparaître, de manière visible à l'œil humain, un signe, dessin, caractère, symbole ou toute forme graphique, colorée ou non, en volume ou sensiblement à plat sur la paroi du récipient, par exemple en verre.

Par revêtement sol gel, on entend une couche superficielle de matériau obtenu par solidification d'un mélange sol gel sur la surface d'un objet formé d'un autre matériau, de façon solidaire et durable, c'est-à-dire pour des durées supérieures à plusieurs années. Un tel revêtement modifie alors les propriétés de surface, physiques et/ou chimiques de cet autre matériau.

L'invention trouve une application particulièrement importante bien que non exclusive dans le domaine de la fabrication et du marquage de flacons ou de pots destinés à recevoir et conserver des produits agroalimentaires, pharmaceutiques, cosmétiques ou de la parfumerie dont une face interne a été revêtue d'une couche sol gel pigmentée.

Il est connu le marquage externe de la paroi d'un récipient, par exemple par coloration.

Ce marquage externe présente cependant des inconvénients. Il risque en effet d'être sensible aux chocs et éraflures extérieurs ce qui dégrade à terme la qualité esthétique nécessaire notamment dans le domaine de la parfumerie.

Il est également connu d'appliquer un revêtement sol gel sur la face interne d'un flacon. Dans ce cas, le contenu vient cependant en contact direct avec le revêtement interne, ce qui présente des inconvénients pour des raisons d'extraction et/ou de relargage de composants dans le contenu (liquide pharmaceutique, parfums...) qui pourraient les détériorer ou même les rendre dangereux.

En appliquant une couche sur l'intérieur du récipient, on introduit en effet directement dans le flacon des éléments potentiellement nuisibles.

On connaît ainsi (WO2010/061150) un procédé de marquage de la face intérieure d'un corps creux en verre métallisé, mais qui peut contaminer le contenu.

De plus, dans le cas où on revêt une partie seulement de la surface, on introduit une frontière ou arrêt du revêtement, propice au décollement préférentiel entre zones recouvertes et zones non recouvertes.

La couche interne est par ailleurs peu accessible.

Procéder au marquage par application d'un revêtement interne présente donc des inconvénients.

L'application d'un revêtement interne se fait également classiquement par aspersion ou par
tamponnages, ce qui entraine des risques de bavures, de surépaisseurs et de manque de précisions tous gênants pour un marquage esthétique.

On connaît (US 2005/0218126) un dispositif de gravage de la face externe d'un tube de verre par rayonnement laser. Ce traitement agressif n'est pas adapté à l'attaque de la face interne d'un flacon de parfum.

On connaît également (US2011/0039038), un procédé de décoration d'une bouteille de parfum par utilisation d'un laser du type laser YAG pour traiter une couche de revêtement.

Mais outre le fait que ces lasers nécessitent une focalisation très fine, ils interagissent avec des matériaux tels que le verre, ce qui limite leur champ d'utilisation et risquent de générer des relargages ultérieurs inacceptables de la paroi du récipient dans le produit qui y est contenu. La présente invention permet de pallier ces inconvénients en permettant notamment de répondre mieux que les procédés antérieurement connus aux exigences de la pratique, notamment en ce qu'elle autorise un marquage interne de grande précision tout en minimisant les interactions contenant-contenu, et/ou certaines interactions environnement-contenu, et ce plus particulièrement pour le stockage en flacons de verre, nécessitant la conservation de produits de façon neutre pendant un temps assez long (par exemple plusieurs mois).

Par plus grande précision on entend des valeurs déterminées à ± 100 nm en épaisseur pour une couche et/ou en longueur pour un motif par exemple en couche fine.

Avec l'invention il va être possible de réaliser un motif ou lettrage intérieur précis, en une couleur ou en plusieurs couleurs (multicouleurs).

De plus, et par exemple, dans un flacon parallélépipédique, les quatre surfaces internes/externes de deux parois opposées peuvent être marquées simultanément et/ou successivement, notamment pour faire des motifs 3D ou en profondeur.

Pour ce faire la présente invention propose notamment un procédé de marquage d'au moins une face interne d'un récipient par au moins un motif déterminé, dans lequel on recouvre intérieurement au moins en partie la dite face interne d'une couche sol gel pigmentée réactive aux rayonnements laser, par pulvérisation ou tamponnage de ladite couche sur une zone déterminée précise agencée pour contenir le motif, et on révèle le motif par interaction entre le sol gel et un rayonnement laser UV programmé de façon spécifique en fonction du motif à faire apparaître.

Bien que l'invention permette de créer et/ou corriger a posteriori un motif, elle est particulièrement avantageuse sur une couche ou un motif sensiblement homogène et/ou d'épaisseur sensiblement uniforme.

Ainsi, tout gain en qualité d'application de la couche ou du motif est un gain non seulement esthétique mais également en termes de risque de relargages futurs de la paroi ou de la couche dans le produit contenu.

Avec l'invention le laser comprend une optique à distance focale longue ce qui autorise une profondeur de champ supérieure à un ou plusieurs millimètres par exemple supérieurs à 1 mm, par exemple supérieure à 3 mm, par exemple supérieure à 5 mm.

Par profondeur de champ on entend la distance axiale perpendiculaire au plan de l'optique (c'est-à-dire selon l'axe de focalisation) incluant le plan focal du laser de façon centrée par rapport audit plan focal et à l'intérieur de laquelle le faisceau laser conserve des propriétés notamment énergétiques sensiblement identiques.

Dans un mode de réalisation avantageux l'invention propose un Procédé de traitement d'au moins une face interne d'un récipient , dans lequel on recouvre intérieurement au moins en partie la dite face interne d'une couche sol gel, et on traite ladite couche par rayonnement laser, caractérisé en ce que ladite couche étant une couche pigmentée réactive aux rayonnements laser, on applique la couche sol-gel par pulvérisation ou tamponnage de ladite couche sur une zone déterminée précise agencée pour contenir un motif et on révèle le motif par interaction entre le sol gel et un rayonnement laser UV est émis par un dispositif comprenant une optique à distance focale longue autorisant une profondeur de champ supérieure à 1 mm et est programmé de façon spécifique en fonction dudit motif à faire apparaître.

Avantageusement la profondeur de champ est supérieure à 1,2 mm par exemple supérieure à 1,5 mm, par exemple de l'ordre de 3 mm (+ 10%).

Dans un mode de réalisation avantageux on focalise (c'est-à-dire on place le plan focal) le rayonnement laser UV à une distance déterminée réglable, par exemple non nulle, de la face interne à marquer.

Il est ainsi possible de marquer préférentiellement une surface placée plus proche du plan focal tout en ayant un impact contrôlé simultanément sur une autre surface.

Avantageusement on utilise un laser UV de longueur d'onde comprise entre 255 et 400 nm par exemple de 355 nm et de puissance comprise entre 2 W et 5 W, par exemple 3 W.

On observe alors que en combinaison avec les autres caractéristiques de l'invention, ces longueurs d'onde aux photons UV cassent directement les liens atomiques impactés sans chauffer et abîmer la matière autour, ce qui permet de contrôler la précision et l'impact sur la matière du récipient.

Egalement avantageusement le laser utilise une lentille à champ plat (i.e. qui redresse la courbure de champ) ce qui permet de déplacer le point focal sur un plan. Dans ce mode de réalisation la distance focale est par exemple de 210 mm.

En déplaçant de façon relative le flacon par rapport à cette distance et en réglant les paramètres du laser, on choisit ainsi la ou les surfaces du flacon à marquer ainsi que le type de marquage (enlevage d'une partie de la matière de revêtement et/ou marquage du revêtement lui-même).

Les paramètres de réglages principaux sont pris parmi le positionnement du point ou plan focal par rapport à la ou aux parois à marquer, la fréquence, le % de la puissance maximale du laser mis en oeuvre, la vitesse de balayage du rayonnement choisie et la résolution optique (profondeur de champ) retenue.

Dans des modes de réalisation avantageux, on a par ailleurs et/ou de plus recours à l'une et/ou à l'autre des dispositions suivantes :
- on applique la couche de recouvrement par pulvérisation, par le biais d'une buse vibrante et/ou oscillante autour d'une direction de déplacement de la buse dans le flacon ;
- on applique au moins deux taches de couleurs différentes agencées pour permettre la réalisation d'un motif à au moins deux couleurs.

On peut ainsi superposer et/ou juxtaposer des couches de couleurs différentes et réaliser un motif unique ou non, d'un seul tenant ou non. Il est par exemple possible de réaliser un motif par exemple de dragon au moins bicolore ;
- la distance déterminée situe le plan focal sur une face interne revêtue ;
- la distance déterminée situe le plan focal au-dessus ou au-dessous de la face interne revêtue ;
- on superpose plusieurs motifs de marquage les uns aux autres, sur une même face, dont un premier motif.

L'empilement des couches permet des jeux de couleurs différentes et des possibilités de faire apparaître selon l'action de laser une ou plusieurs couches simultanément par contraste avec la dernière;
- on réalise la superposition par au moins une itération d'une étape d'application d'une couche colorée et, d'une étape de dégravage d'un motif dans ladite couche colorée.

Par dégravage on entend notamment ici, l'action du laser sur au moins une couche se sorte à décoller et/ou évaporer et/ou retirer une partie de ladite couche sur une épaisseur donnée par exemple supérieure à l'épaisseur de la couche de sorte à faire apparaître la couche inférieure ou le verre sous-jacent.

La superposition s'entend par exemple d'un empilement, dans le sens de l'épaisseur du verre, d'au moins une partie des au moins deux couches superposées ;
- on repère chaque motif de marquage dans le champ laser par une même référence géométrique marquée lors du marquage du premier motif ;
- le pigment de la couche sol gel lui conférant une coloration spécifique initiale, on focalise le rayonnement laser autour de la surface de la face interne, à une distance déterminée agencée pour enlever une partie de ladite couche de façon à faire apparaître ledit motif ;
- on focalise le rayonnement laser autour de la face interne à une distance déterminée pour cuire et fixer le sol gel à l'emplacement et selon le ou les motifs recherchés, et on retire l'excédent non cuit autour du ou des motifs ;
- le laser est situé à l'extérieur du récipient qui tourne et/ou se déplace horizontalement et/ou verticalement en relation avec ce dernier pour exposer les parties de flacon destinées à présenter ledit motif;
- on contrôle le rayonnement en continu et/ou discontinu pour faire apparaître ou non les éléments du motif.
- on marque simultanément plusieurs parois du récipient avec un même rayonnement laser UV ;
- on marque simultanément au moins deux parois du récipient, dont l'une des parois au moins est marquée par attaque du verre et une autre paroi au moins est marquée par interaction entre la couche sol gel et le rayonnement laser UV de sorte à donner un effet tridimensionnel au motif.

Il est ainsi possible avec une même excitation/impulsion du laser, c'est-à-dire en une seule opération, d'interagir avec le même rayonnement sur au moins deux parois sur le chemin parcouru par ledit rayonnement.

Avec l'invention il est donc notamment possible de réaliser par exemple une opération de dégravage d'une paroi et une opération de changement de couleur localisée d'une couche sol gel sur une paroi en vis-à-vis de sorte que la superposition visuelle des motifs respectifs des parois, et les éventuels décalages maîtrisés de ceux-ci, induisent une impression de relief ou de motifs en trois dimensions.

Avantageusement le sol gel utilisé est formé à partir de précurseurs alkoxysilanes et/ou organosilanes, de solvant ethanol et/ou butoxyethanol, de surfactants, d'acide citrique et d'additifs et/ou pigments et/ou colorant sans ou ne comprenant pas de quantité importante de composés réfléchissant les UV du laser.

L'invention propose également un dispositif mettant en œuvre le procédé tel que décrit ci-dessus.

Elle propose aussi un dispositif de marquage comprenant un outil de support d'un flacon, des moyens de mise en rotation du flacon, et des moyens laser UV externes au flacon, agencés pour diriger un faisceau laser UV de façon programmée pour faire apparaître un motif sur la face interne du flacon préalablement enduit d'un produit sol gel pigmenté.

Selon l'invention les moyens laser UV comprennent une optique à distance focale longue autorisant une profondeur de champ supérieure à 1 mm.

Par supérieure à 1 mm, on entend supérieure 1 mm à +/- 20 % (de 1 mm) par exemple à +/- 10 % ou à +/-5 %.

L'invention propose également un récipient ou flacon obtenu par le procédé décrit ci-dessus.

Elle concerne aussi un récipient, en verre ou en matière plastique, ayant au moins une face interne comprenant un revêtement interne sol gel marqué d'un motif selon le procédé décrit ci-dessus.

Avec le procédé selon l'invention les récipients obtenus présentent non seulement un marquage d'une meilleure esthétique mais de plus des propriétés améliorées de leur surface interne.

Il est en effet possible de réaliser via la couche de revêtement qui reste autour du marquage et/ou de celle du marquage, une fonction barrière thermique en plus de sa résistance au relargage.

L'invention sera mieux comprise à la lecture de la description qui suit de modes de réalisation donnés ci-après à titre d'exemples non limitatifs.

Elle est effectuée en référence aux figures qui l'accompagnent dans lesquelles :
Les figures 1A, 1B et 1C montrent schématiquement la position du plan focal du laser par rapport au récipient pour réaliser divers marquages selon le procédé de l'invention plus particulièrement décrit ici.

La figure 2 montre schématiquement les étapes de réalisation d'un motif multicolore par juxtaposition selon un mode de réalisation de l'invention.

La figure 3 montre schématiquement les étapes de réalisation d'un motif multicolore par superposition selon un autre mode de réalisation de l'invention.

Les figures 4 et 4A, à 15 et 15' montrent des modes de réalisation (photographies 1 à 14) de récipients marqués selon l'invention.

La figure 16 est une vue schématique en coupe d'un mode de réalisation d'un dispositif de marquage selon l'invention.

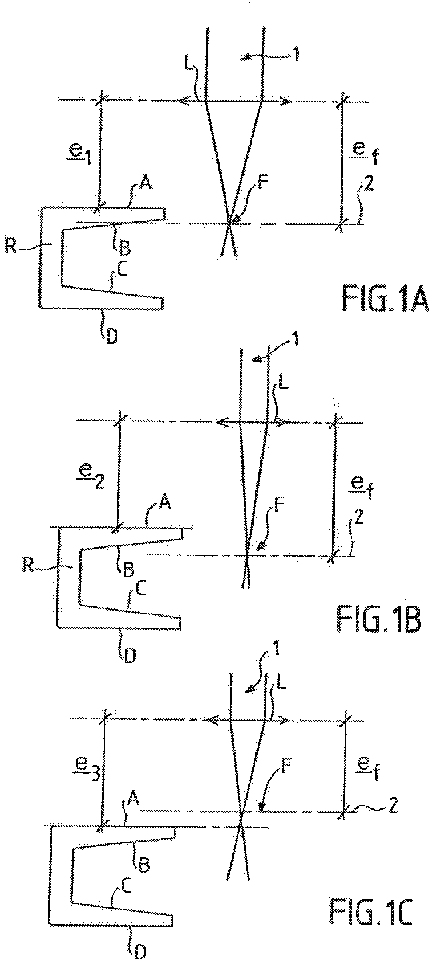

Les figures 1A, 1B et 1C montrent un flacon ou récipient R parallélépipédique, par exemple en verre, représenté schématiquement en coupe, couché sur le côté, et qui comprend des faces de parois latérales parallèles ou sensiblement parallèles à savoir une face externe supérieure A, une face interne supérieure B, une face interne inférieure C et une face externe inférieure D.

On a représenté sur la droite des figures, et de façon décalée pour une meilleure compréhension du schéma, le faisceau laser UV 1, focalisé par une lentille L, son point focal F se plaçant dans le plan focal 2.

Sur la figure 1A le flacon F est positionné de sorte que la distance e_{f} entre la lentille et le plan focal et la distance e₁ entre la face A supérieure externe du flacon, mette le plan focal 2 sensiblement sur la face interne B du flacon.

Une telle disposition permet la formation d'un logo par enlèvement du sol gel sur la surface B préalablement recouverte de sol gel (énergie faible, avec le plan focal dans le sol gel). Le réglage de l'énergie et de la fréquence du laser est alors effectué de façon à la portée de l'homme du métier pour permettre l'enlevage et/ou la cuisson du sol gel sans attraper la surface et ce en fonction de la géométrie intérieure du flacon.

Dans ce mode de réalisation le réglage du plan focal peut être à 210 mm de la lentille, pour une distance e₁ de 207 mm (épaisseur de paroi du flacon sensiblement de 3 mm).

La figure 1B montre un réglage du plan focal par rapport au flacon à l'intérieur du flacon, par exemple une distance e₂ de 202 mm, toujours pour une distance focale de 210 mm.

Une telle disposition va permettre le marquage des deux faces internes B et C préalablement revêtues de sol gel, sur lesquelles on va pouvoir par exemple marquer le même logo de façon parallèle avec un niveau d'énergie suffisant.

La figure 1C montre par contre le positionnement du plan focal F au-dessus de (ou sur) la face supérieure A de la paroi supérieure du flacon, qui est par exemple située à une distance e₃ de 210 à 215 mm.

Cette disposition va permettre le marquage simultané sur la surface A par attaque du verre et sur la surface B par attaque du sol gel, ce qui va donner un effet 3D sur le logo marque par exemple.

On notera de plus que si le plan focal est dans le verre, il y a marquage dans le verre.

De même, on peut utiliser une lentille courbe pour une surface courbe (au lieu d'une lentille plate sur une surface plate).

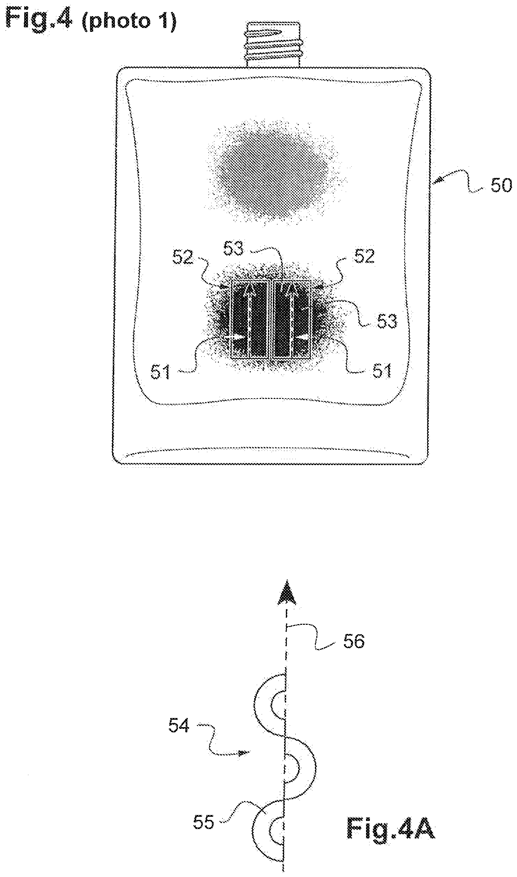

Les résultats exceptionnels et totalement nouveaux obtenus avec l'invention sont illustrés sur les figures 4 à 15' comme cela sera explicité plus précisément ci-après.

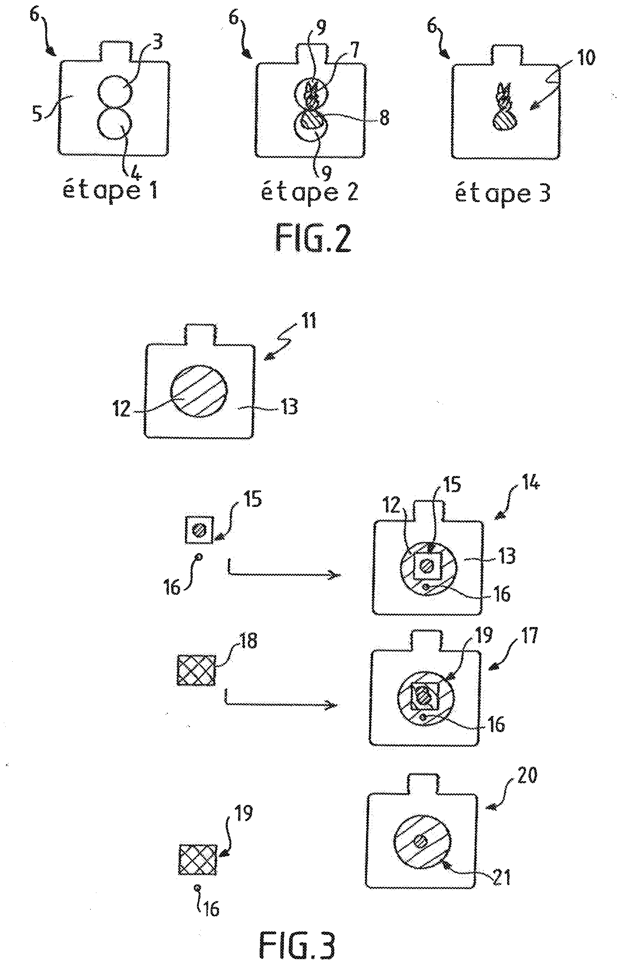

La figure 2 montre les étapes d'un autre mode de réalisation du procédé selon l'invention par constitution de couches multicouleurs par juxtaposition de deux taches 3 et 4 de couleurs différentes sur la face interne de la paroi 5 du flacon parallélépipédique 6.

On applique ces taches ou prémotifs (motifs initiaux déposés conduisant après traitement, notamment laser, au (x) motif(x) final(s)) de sol gel de façon connue en elle-même, par exemple avant focalisation du laser UV (étape 1). Préférentiellement les deux applications seront séchées après marquage laser, ce qui permet de n'effectuer qu'une seule cuisson.

Puis on fait des marques 7 et 8 de couleurs différentes par marquage laser UV comme indiqué (les parties claires 9 étant enlevées au laser).

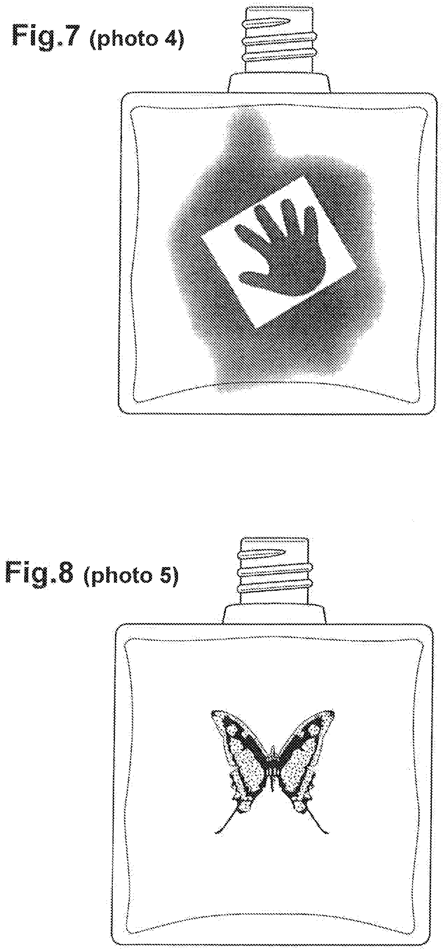

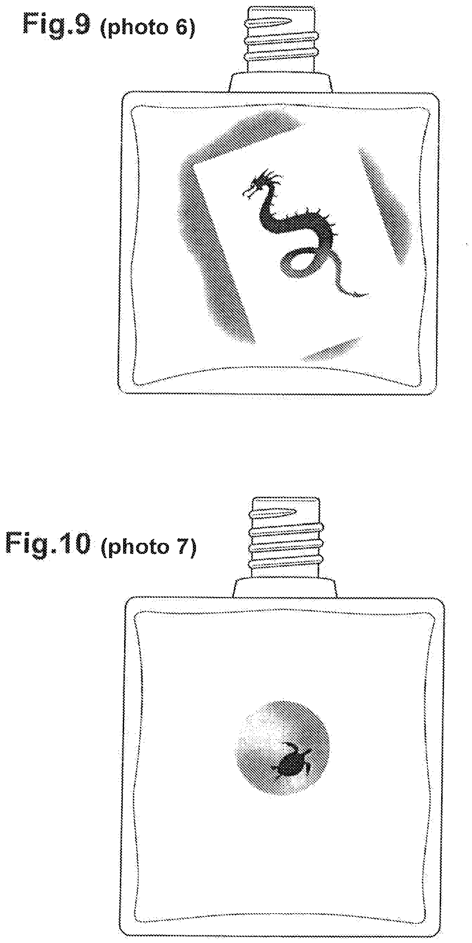

Le résultat figure 9 du motif est bicolore (cf. également ci-après les figures 8 à 10).

La figure 3 montre schématiquement les étapes du procédé de marquage selon un mode de réalisation de l'invention par superposition de couleurs.

La première étape 11 montre le marquage par exemple par aspersion ou tamponnage d'une tache de couleur 12 sur la paroi interne d'un flacon 13.

L'étape suivante 14 consiste à venir réaliser un motif 15 au laser UV avec croix ou point de position 16 sur la tache 12 (la tache incluant le point).

L'étape suivante 17 consiste à venir apposer une deuxième couleur 18, par exemple par aspersion, sur le motif marqué 15 pour obtenir la superposition de couleur sur le motif ainsi complexifié 19.

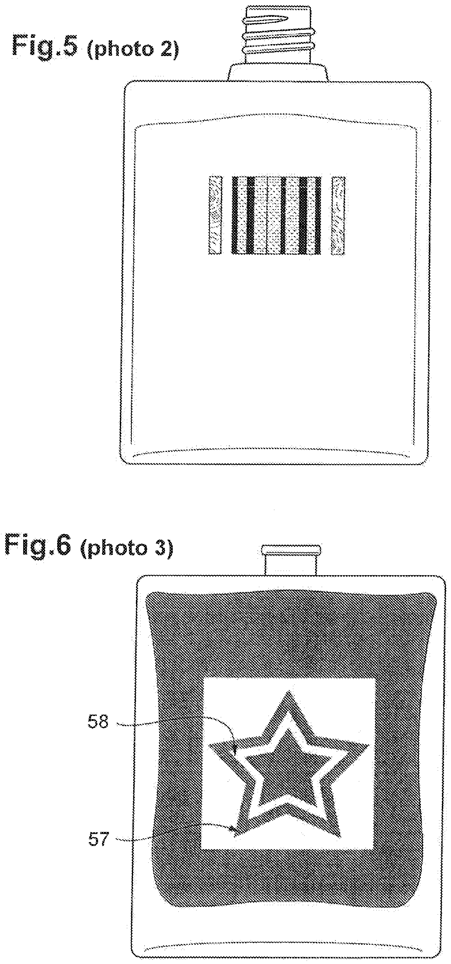

Puis on vient positionner à nouveau le laser de façon précise grâce au point 16 de position en marquant une nouvelle croix ou un nouveau motif au laser jusqu'à superposition, puis on effectue le deuxième marquage laser (étape 20) pour former le motif 21 à deux couleurs. Le résultat est notamment illustré par les figures 5 et 8.

On va maintenant décrire la réalisation d'un motif ou lettrage précis intérieur, à une couleur ou à plusieurs couleurs.

Dans ce mode de réalisation les quatre surfaces peuvent être marquées simultanément ou successivement pour faire des motifs 3D ou en profondeur.

Première étape :
Application du ou des motifs grossiers par pulvérisation.

Cette application peut être réalisée de plusieurs façons.

Une première façon consiste à utiliser une buse de type aérographe permettant une pulvérisation fine ou jet d'encre.

La pulvérisation/éjection se fait comme suit : L'objet à revêtir et le système de revêtement sont déplacés l'un par rapport à l'autre à l'aide par exemple d'un robot ou machine numérique afin d'apposer un motif / zone relativement précise (par exemple tâche ronde, ovale, carré, rectangle...).

Le motif final que l'on souhaite obtenir doit s'inscrire dans la zone déposée.

Dans le cas de cette pulvérisation, les zones sont réalisées par exemple avec un balayage vertical de l'organe de dépose (pistolet monté sur un axe numérique vertical), et une mise en position en rotation de l'objet à revêtir (l'objet est monté sur un axe de rotation numérique).

L'axe de rotation permet en outre de réaliser des « oscillations » / vibrations en rotation (va et vient rapides autour d'une position moyenne) afin de lisser / homogénéiser la matière déposée et éviter les surcharges locales.

Le recours à des débits de produit de dépose très faibles permet également de réduire les débordements / sprays / gouttes à l'extérieur de la zone à revêtir.

On a représenté sur la figure 4 (photo 1) un exemple de flacon 50 obtenu avec le procédé décrit ci-dessus. On commence par former une tâche (ou prémotif) carrée.

Plus précisément les rectangles 52 en traits mixtes représentent les deux zones accolées qui ont permis ici de réaliser cette tâche carrée.

Les flèches 53 représentent la trajectoire moyenne de l'organe de dépose (ici pulvérisation) du fait des oscillations 54, ici en rotation (cf. schéma de la figure 4A).

La direction réelle de l'organe de dépose se situe donc au cours du temps le long du « serpent » 55 (la flèche 56 représentant toujours la trajectoire moyenne).

Pour réaliser une forme, il est donc fait recours à :
- des déplacements précis entre l'organe de dépose et l'objet à revêtir,
- des oscillations / mouvements rapides entre l'organe de dépose et l'objet à revêtir,
- une réalisation de la zone éventuellement en plusieurs « sous zones »,
- l'utilisation de débits de revêtements (cas de la pulvérisation) très faibles (fonctionnement type aérographe), par exemple 100 microlitres/min. En apposant plusieurs marquages de couleurs différentes et placées judicieusement en fonction du dessin final cherché, on peut réaliser un motif multicouleurs.

Avec l'invention dans ce mode de réalisation, on obtient ainsi un marquage préalable précis avec pulvérisation intérieure d'un produit compatible et résistant une fois dégravé, éventuellement en plusieurs couleurs sur le même motif ou sur le même packaging.

L'étape suivante est celle du marquage proprement dit avec un laser. Pour ce faire on utilise un laser UV de profondeur de champ importante permettant a) de traiter un revêtement sur une surface non plane sans changer la focalisation b) de traiter plusieurs surfaces à la fois.

Il est de plus observé avec l'invention une réduction des déchets de dégravage (moins de nettoyage, moins de matière utilisée, moins d'odeurs) et un temps de réalisation de motif optimisé (par rapport à celui nécessaire pour dégraver toute la surface).

Dans le mode de réalisation plus particulièrement décrit ici on a choisi un laser UV à 355 nm, de puissance 3 W, et de profondeur de champ utile sans perdre la précision du marquage importante (par exemple+/- 5 mm) ce qui permet de traiter une surface ou plusieurs surfaces n en même temps.

A cette longueur d'ondes les photons UV cassent directement les liens atomiques sans chauffer et abîmer la matière autour, ce qui permet de contrôler la précision et d'éviter des dommages au verre. Les lasers UV agissent sur la plupart des revêtements testés, contrairement aux autres types de lasers qui n'agissent que sur certaines couleurs/matières.

Il en est de même pour les plastiques : pas de chauffe et donc les plastiques ne sont pas endommagés.

Avec un mode de réalisation de l'invention il est également prévu un positionnement du laser et des motifs particulièrement efficaces.

Pour pouvoir superposer des motifs ou des couleurs, il faut en effet être capable de repositionner le motif sans repère, au même endroit sous le laser.

Pour ce faire et comme on l'a vu en référence à la figure 3, on marque au laser, en même temps que le motif ou dessin un point ou une croix positionnée à un point (coordonnés) précis sous le motif dans la partie colorée destinée à être enlevée.

Les autres motifs sont également repérés dans le champ du laser par la même référence géométrique.

Puis on applique la deuxième couleur dans la partie prévue à cet effet, par exemple avec la buse ou spray décrit ci-dessus, par exemple une couleur bleue.

Puis en utilisant le laser et une croix ou cible, on vient marquer pour positionner exactement sur le repère.

On obtient alors un résultat avec croix marquée pour repérer le positionnement avant la dernière étape.

Le marquage/dégravage de la deuxième couleur, parfaitement positionnée en enlevant le marquage, est alors réalisé et/ou réitéré jusqu'au dernier passage laser sur la dernière couleur qui permet de faire disparaître le repère.

On obtient ainsi (cf. figure 5 - photo 2) un alignement et des repères invisibles après application, tout en gommant les défauts du verre ou du positionnement et ce avec des multiples couleurs de façon précise.

On a représenté en référence aux figures 6 à 15' (photos 3 à 14) d'autres modes de réalisation de flacons obtenus avec l'invention.

Un premier flacon avec spray de couleur local après gélification (cuisson) et dégravage laser local autour du motif est représenté sur la photo 3 (figure 6) .

Ici le principe est d'appliquer une couleur sur une zone localisée interne du flacon par spray en utilisant une programmation adéquate. Le laser de dégravage permet d'enlever l'excès de matière autour des lettres ou du motif 57 que l'on veut laisser en résultat final.

Une autre possibilité consiste à laisser un reste 58 de la première étape de spray autour du dégravage laser faisant un effet de pochoir ou tamponnage (figure 7 - photo 4).

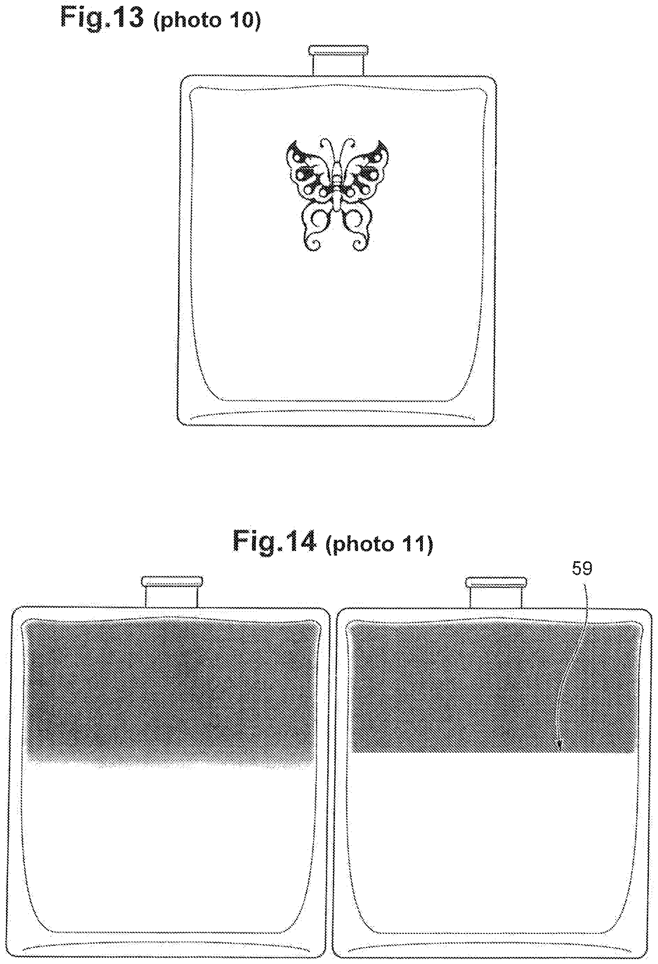

Il donc possible de réaliser un motif simple monochrome (figure 13) et également et comme on l'a vu (cf. figures 2 et 3) il est possible avec l'invention de réaliser plusieurs taches de couleur juxtaposées ou superposées au départ, en prévoyant le positionnement et la taille du dessin à réaliser, et/ou de réaliser le motif multicouleurs en une seule passe laser (selon le principe illustré à la figure 2 et dont un exemple de résultat est représenté sur la figure 9) et/ou en plusieurs passes laser (selon le principe illustré à la figure 3, et dont des exemples de résultats sont représentés sur les figures 5, 8, et 10).

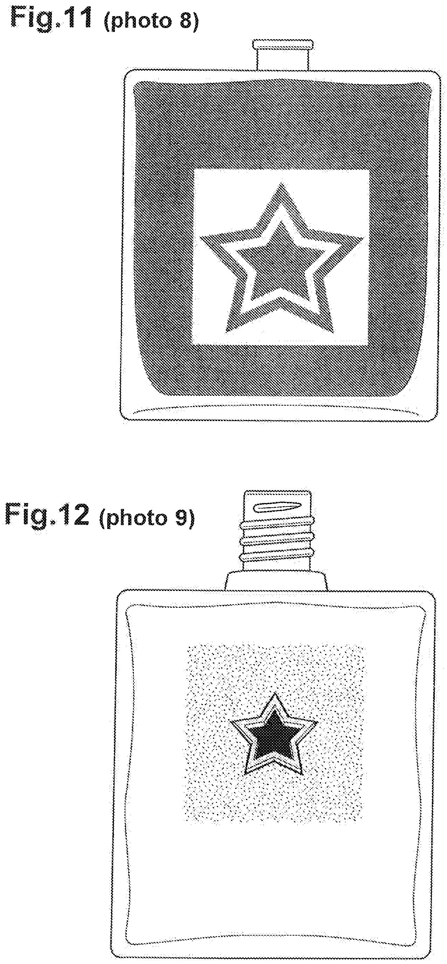

De même, et comme indiqué ci-dessus un marquage multisurfaces simultanés pour effet 3D est possible (cf. figure 11-photo 8).

Grâce à la profondeur de champ importante du laser, on peut en effet marquer jusqu'à quatre surfaces successives superposées à savoir 1 ou 2 surfaces avec motifs et 1 ou 2 surfaces du verre avec un gravage du verre.

Sur les étoiles de la photo 8 (figure 11), les deux faces sont réalisées séparément, le verre étant légèrement gravé en même temps que le motif, ce qui donne cet aspect 3D, de relief.

La puissance, le réglage du laser et le positionnement du flacon sont également choisis pour marquer une des surfaces du verre en plus de marquer le motif de couleur.

Dans le cas correspondant à la figure 12 photo 9), le flacon est descendu pour que la focale soit plus proche de la surface externe, la puissance du laser est à 90 %. L'étoile noire est marquée sur la surface interne et le verre gravé en négatif à l'extérieur.

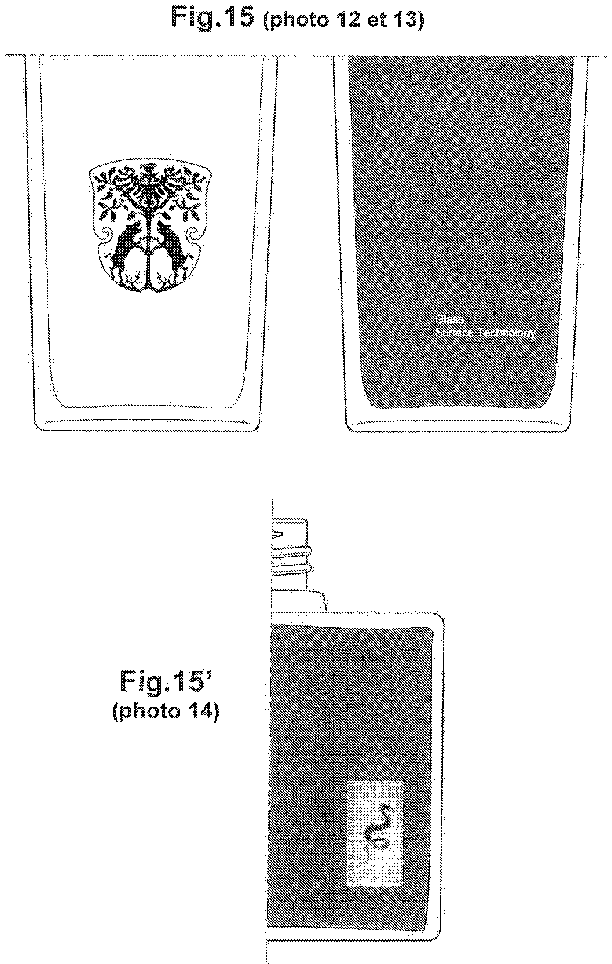

De même on peut appliquer le même motif en simultané / superposé sur plusieurs faces (dragon en bas à droite de la figure 15-photo 14) Dans ce cas, le point de focale du laser est à l'intérieur du flacon, le flacon est remonté plus haut. De même la puissance du laser est élevée pour pouvoir bien dégraver les deux faces simultanément.

Avec l'invention, on obtient également des bandes de couleur ou un arrêt bicouleur net (cf. figure 14-photo 11).

Le laser appliqué à la limite de la zone d'application de la tache ou zone de couleur permet en effet de façon étonnante de terminer nettement l'arrêt 59 de zone.

L'invention permet également un marquage du verre en surface, dans le verre ou sur la surface interne puis une couche de couleur en une deuxième étape.

L'objectif ici est de marquer/graver le verre à différentes profondeurs suivant la puissance (entre 90 et 100%) et le positionnement du laser (cf. figure 15 - photos 12 et 13).

Lorsque la surface interne est gravée avant l'application du sol gel, on peut alors s'en servir comme anti-contrefaçon (pas possible d'enlever le marquage sans la couleur).

Avec l'invention, le captage des déchets de dégravage est facilité.

Lors du dégravage, des déchets peuvent être en effet générés (revêtement ainsi que éventuellement le verre dégravé).

Ces déchets peuvent avoir une odeur et se coller sur les surfaces internes des objets, le nettoyage ultérieur étant laborieux (un simple rinçage ne suffit pas à décoller les déchets et les odeurs restent persistantes).

Avec le procédé de marquage selon l'invention, il est possible grâce à une aspiration au niveau de l'ouverture des flacons, d'obtenir une diminution des odeurs résiduelles après dégravage. Il y a aussi surtout moins de déchets à nettoyer ultérieurement.

Une solution d'ajout d'un liquide (eau par exemple) dans les objets à dégraver permet également dans un mode de réalisation de l'invention de capter tous les déchets issus du dégravage avant qu'ils ne se collent sur les surfaces.

Une fois le motif réalisé, il ne reste qu'à vidanger l'objet, et éventuellement rincer, et sécher. Ce procédé permet également de supprimer les odeurs.

A noter que la réalisation de tâches localisées décrites ci-dessus permet quoiqu'il en soit de réduire la quantité de déchets à évacuer de l'intérieur des objets à traiter.

L'invention permet également l'ajout aisé de pigment ou réactif dans le sol gel révélé par laser.

Ici le principe est le suivant : un pigment est ajouté dans la matière sol gel, le laser permet alors depuis l'extérieur du récipient et au travers du verre, de faire réagir le pigment localement pour dessiner un motif ou un lettrage.

Par exemple Merck fournit un pigment à base mica qui noircit avec un laser. La longueur d'onde et le type du laser sont adaptés au pigment et doivent traverser le verre. Des pigments changent en effet de couleur par excitation avec le laser (Olikrom).

Une cuisson ou fixation par laser est également possible.

Le laser sert à ce moment-là également à apporter l'énergie pour cuire et fixer le sol gel coloré sur la surface du verre, l'excédent autour du motif étant ensuite rincé avant cuisson.

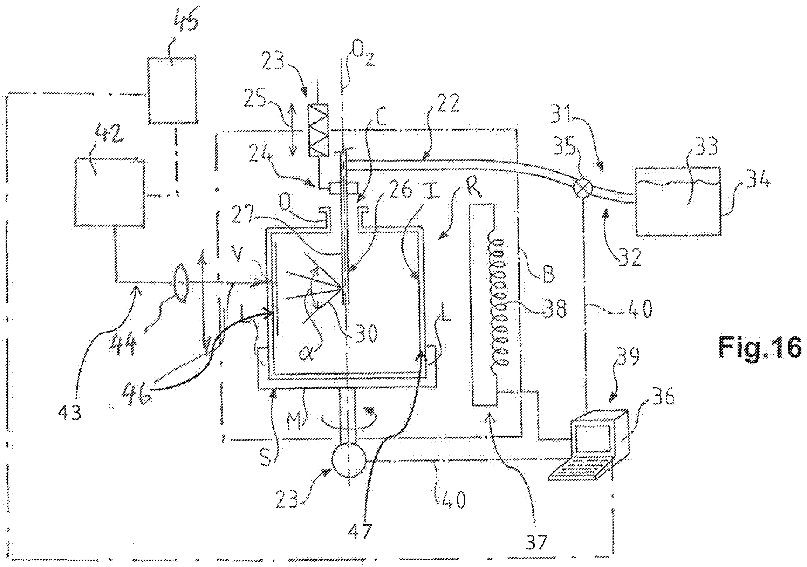

On va maintenant décrire de façon non limitative un mode de réalisation d'un dispositif permettant de mettre en œuvre l'invention en référence à la figure 16.

Dans la suite on pourra utiliser les mêmes numéros de référence pour désigner des éléments identiques ou similaires.

Plus précisément la figure 16 montre un dispositif 22 de revêtement V d'au moins une portion de la surface interne I d'un récipient R, ici par exemple formant une fiole ou flacon parallélépipédique en verre avec un col C cylindrique centré autour d'un axe Oz. Il comporte donc à l'une de ses extrémités (extrémité haute), une ouverture O en goulot, l'ouverture du goulot comprenant le col C de diamètre plus petit que celui du récipient ou flacon.

Le récipient forme ainsi sensiblement une enceinte.

Le dispositif comprend un support S du récipient, comprenant par exemple une mâchoire M de rétention en forme de coupelle ou de U dont les branches L enserrent le culot, c'est à dire le fond du récipient fixé par des vis latérales (non représentées).

Des moyens 23 de mise en rotation du récipient autour de son axe Oz à une vitesse V déterminée sont prévus, connus en eux-mêmes. La vitesse V peut être constante ou variable et régulée. Plus précisément les moyens comprennent par exemple une barre rotative d'entrainement du support s'étendant suivant l'axe Oz et un moteur d'entrainement de façon connue en elle-même.

Du côté du goulot O du récipient R, sont montés sur un bâti B, en traits mixtes sur la figure, des moyens 24 d'insertion/extraction (flèche 25) d'un outil ou buse 26 d'aspersion à l'intérieur du récipient.

La buse 26 comprend une tige ou tube 27 longitudinal relié à son extrémité 28 aux moyens 24 d'insertion comprenant un actionneur 23 de déplacement longitudinal tel qu'un vérin.

L'action du vérin, solidaire de la buse 26 translate celle-ci d'une position initiale extérieure au récipient à une position de fonctionnement interne au récipient selon l'axe Oz.

Il permet ainsi une descente progressive continue ou par palier de l'outil d'application de la solution (gel en formation) de revêtement sur la surface interne du récipient R.

La buse engendre une vaporisation 30 selon un angle solide α de dispersion déterminé dépendant de la pression et de la vitesse d'éjection commandée de façon connue en elle-même qui va permettre l'apparition d'un revêtement sur une zone déterminée précise.

Le tube est relié, à son extrémité opposée à un système 31 de distribution d'une solution liquide de revêtement à asperger comprenant des moyens 32 d'alimentation en solution 33 liquide ou sensiblement liquide pour permettre l'aspersion, à un débit D déterminé.

Le système 31 comprend ainsi un réservoir 34 de stockage dudit liquide et des moyens 35 de circulation du liquide (pompe doseuse) agencés pour réguler le débit D du liquide via un calculateur 36 et commande également les autres actionneurs mis en œuvre dans le dispositif.

Le réservoir comprend dans son fond un moyen mélangeur par exemple un agitateur (non représenté).

Le gel de revêtement est le matériau liquide durcissable de revêtement obtenu par le procédé SOL-GEL par exemple ci-dessus décrit et réactive aux rayonnements UV.

Le dispositif comprend également des moyens 37 de chauffe du récipient R connus en eux-mêmes permettant l'élévation de la température d'une partie de la surface interne du récipient jusqu'à un seuil de température déterminé pour le séchage.

Plus précisément l'échauffement de la surface interne s'effectue par exemple par radiation directe à partir de résistances chauffantes 38 disposées à l'extérieur du récipient ou par diffusion autour de la paroi du récipient disposée en contact par exemple avec une moufle de chauffage (non représentée).

Mais comme on l'a vu, le chauffage/cuisson/séchage peut également être réalisé au moins partiellement par le rayonnement laser.

Dans un mode de réalisation le récipient et la résistance sont sensiblement confinés dans une même enceinte de sorte à former un four pour un échauffement homogène du récipient.

Le dispositif comprend également un ordinateur ou automate 39 de commande numérique comprenant un calculateur 36.

Ceux-ci sont connectés via un bus 40 de données et de façon connue en elle-même, aux actionneurs du dispositif, à savoir à ceux de la mâchoire de rétention du récipient R, c'est à dire du moteur d'actionnement en rotation, à ceux des moyens 24 d'insertion de la buse 26 dans le récipient (vérin), l'agitateur, ainsi qu'à ceux des moyens 35 de circulation/alimentation en liquide (pompe, vanne, buse) et des moyens 37 de chauffe (résistances électriques).

Le calculateur 36 est agencé pour calculer à partir des différentes consignes imposées, une loi de commande de chacun des actionneurs de façon connue en elle-même.

Le dispositif selon l'invention comprend de plus un dispositif laser UV 42 tel que décrit ci-avant, par exemple, pour émettre dans la longueur d'onde de 355 um.

Ce dispositif 42 comprend de façon connue des moyens de génération de rayonnement 43, une lentille de focalisation 44 et des moyens 45 (par exemple optique et connus en eux-mêmes) de réglage en distance par rapport à la face 46 (et ou 47) concernée du flacon par exemple par vis micrométrique servocommandé également commandé par l'ordinateur 36 programmé en conséquence pour régler les paramètres de fonctionnement (distance, puissance, fréquence, et vitesse d'application).

Comme il va de soi et comme il résulte également de ce qui précède, la présente invention n'est pas limitée aux modes de réalisation plus particulièrement décrits. Elle en embrasse au contraire toutes les variantes et notamment celles où le dispositif mettant en œuvre le procédé est différent.

L'application peut ainsi et par exemple se faire par lettrage ou tampon.

Le principe ici est d'utiliser un tampon en forme de lettre ou de motif en caoutchouc (suffisamment petit pour être introduit dans le col du flacon) nappé/trempé de sol gel puis introduit au bout d'une tige (robotisée/articulée dans un second temps) dans le flacon avant d'être appliqué sur la surface du verre. Le tampon est ensuite ressorti du flacon. Le sol gel est ensuite séché.

## Revendications

1. Procédé de traitement d'au moins une face interne (B, C ; 5) d'un récipient (R, F, 6, 13, 50), dans lequel on recouvre intérieurement au moins en partie la dite face interne d'une couche sol gel, et on traite ladite couche par rayonnement laser (1), **caractérisé en ce que** ladite couche étant une couche pigmentée (12) réactive aux rayonnements laser (1), on applique (étape 11) la couche sol-gel par pulvérisation ou tamponnage de ladite couche sur une zone déterminée précise agencée pour contenir un motif et on révèle le motif par interaction entre le sol gel et un rayonnement laser UV programmé de façon spécifique en fonction dudit motif à faire apparaître le rayonnement laser UV étant émis par un dispositif comprenant une optique à distance focale longue autorisant une profondeur de champ supérieure à 1 mm à +/-20%.

2. Procédé selon la revendication 1, **caractérisé en ce qu'**on applique la couche de recouvrement par pulvérisation, par le biais d'une buse (26) vibrante et/ou oscillante autour d'une direction de déplacement de la buse dans le flacon (6, 13, 50).

3. Procédé selon l'une quelconque des revendications précédentes, **caractérisé en ce qu'**on focalise le rayonnement UV à une distance non nulle de la face interne à marquer.

4. Procédé selon l'une quelconque des revendications précédentes, **caractérisé en ce que** le dispositif optique comporte une lentille (44) de focalisation à champ plat.

5. Procédé selon l'une quelconque des revendications précédentes, **caractérisé en ce qu'**on applique au moins deux taches (3, 4) de couleurs différentes agencées pour permettre la réalisation d'un motif à au moins deux couleurs.

6. Procédé selon l'une quelconque des revendications précédentes, **caractérisé en ce qu'**on superpose plusieurs motifs de marquage les uns aux autres, sur une même face, dont un premier motif.

7. Procédé selon la revendication 6, **caractérisé en ce qu'**on réalise la superposition par au moins une itération d'une étape d'application d'une couche colorée et, d'une étape de dégravage d'un motif dans ladite couche colorée.

8. Procédé selon la revendication 6, **caractérisé en ce qu'**on repère chaque motif de marquage dans le champ laser par une même référence géométrique marquée lors du marquage du premier motif.

9. Procédé selon l'une quelconque des revendications précédentes **caractérisé en ce que**, le pigment de la couche sol gel lui conférant une coloration spécifique initiale, on focalise le rayonnement laser autour de la surface de la face interne à une distance déterminée pour enlever une partie de ladite couche de façon à faire apparaître ledit motif.

10. Procédé selon l'une quelconque des revendications précédentes, **caractérisé en ce qu'**on focalise le rayonnement laser autour de la face interne à une distance déterminée pour cuire et fixer le sol gel à l'emplacement selon le ou les motifs recherchés et on retire l'excédent non cuit autour du motif ou des motifs.

11. Procédé selon l'une quelconque des revendications précédentes, **caractérisé en ce que** le laser est situé à l'extérieur du récipient qui tourne et/ou se déplace horizontalement et/ou verticalement en relation avec ce dernier pour exposer les parties de flacon destinées à présenter ledit motif.

12. Procédé selon l'une quelconque des revendications précédentes, **caractérisé en ce qu'**on contrôle le rayonnement en continu et/ou discontinu pour faire apparaître ou non les éléments du ou des motifs.

13. Procédé selon l'une quelconque des revendications précédentes, **caractérisé en ce qu'**on marque simultanément plusieurs parois du récipient avec un même rayonnement UV.

14. Procédé selon la revendication 13, **caractérisé en ce qu'**on marque simultanément au moins deux parois du récipient, dont l'une des parois au moins est marquée par attaque du verre et une autre paroi au moins est marquée par interaction entre la couche sol gel et le rayonnement laser UV de sorte à donner un effet tridimensionnel au motif.

15. Dispositif de décoration d'un flacon comprenant ledit flacon muni d'une paroi interne enduit d'un produit sol gel pigmenté, un outil de support du flacon, des moyens de mise en rotation du flacon, et des moyens (42) laser UV externes au flacon, agencés pour diriger un faisceau laser UV comprenant une optique (44) à distance focale longue autorisant une profondeur de champs supérieure à 1 mm à +/- 20% et des moyens (36, 39, 40, 45 ) de calcul et de programmation agencés pour focaliser à distance d'une face interne (46, 47) dudit récipient de façon programmée, et pour faire apparaître un motif sur ladite face interne du flacon préalablement enduit d'un produit sol gel pigmenté.

16. Récipient en verre ou matière plastique ayant au moins une face interne comprenant un revêtement interne sol gel marqué d'un motif avec le procédé selon l'une quelconque des revendications 1 à 14, **caractérisé en ce qu'**il comporte un marquage obtenu de façon simultanée par le même rayon laser sur et/ou dans deux faces internes en vis-à-vis préalablement revêtues de sol gel et/ou sur et/ou dans la surface d'une paroi et sa face interne enduite de sol gel.

## Patentansprüche

1. Verfahren zur Behandlung mindestens einer Innenseite (B, C ; 5) eines Behälters (R, F, 6, 13, 50), bei dem man die genannte Innenseite innen zumindest teilweise mit einer Sol-Gel-Schicht bedeckt und die genannte Schicht mit Laserstrahlung (1) behandelt, **dadurch gekennzeichnet, dass** die genannte Schicht eine pigmentierte Schicht (12) ist, die gegenüber Laserstrahlung (1) reaktiv ist, man die Sol-Gel-Schicht durch Zerstäuben oder Auftupfen der Schicht auf eine vorbestimmte präzise Zone aufbringt (Schritt 11), die so beschaffen ist, dass sie ein Motiv enthält, und man das Motiv durch Wechselwirkung zwischen dem Sol-Gel und einer UV-Laserstrahlung sichtbar macht, die spezifisch in Abhängigkeit von dem sichtbar zu machenden Motiv programmiert ist, wobei die UV-Laserstrahlung von einer Vorrichtung emittiert wird, die eine Optik mit langer Brennweite umfasst, die eine Schärfentiefe von mehr als 1 mm bei +/-20% zulässt.

2. Verfahren nach Anspruch 1,
**dadurch gekennzeichnet,**
**dass** die Deckschicht durch Sprühen, mittels einer um eine Bewegungsrichtung der Düse vibrierenden und/oder oszillierenden Düse (26) in der Flakon (6, 13, 50) aufgebracht wird.

3. Verfahren nach einem der vorhergehenden Ansprüche,
**dadurch gekennzeichnet,**
**dass** man die UV-Strahlung in einem von Null verschiedenen Abstand von der zu markierenden Innenseite fokussiert.

4. Verfahren nach einem der vorhergehenden Ansprüche,
**dadurch gekennzeichnet,**
**dass** die optische Vorrichtung eine Flachfeld-Fokussierungslinse (44) umfasst.

5. Verfahren nach einem der vorhergehenden Ansprüche,
**dadurch gekennzeichnet,**
**dass** mindestens zwei Flecken (3, 4) mit unterschiedlichen Farben aufgebracht werden, die so angeordnet sind, dass ein Muster mit mindestens zwei Farben erzeugt werden kann.

6. Verfahren nach einem der vorhergehenden Ansprüche,
**dadurch gekennzeichnet,**
**dass** auf einer Seite mehrere Markierungsmuster übereinander gelegt werden, darunter ein erstes Muster.

7. Verfahren nach Anspruch 6,
**dadurch gekennzeichnet,**
**dass** durch mindestens eine Iteration ein Schritt des Aufbringens einer Farbschicht und ein Schritt des Abtragens eines Musters in der Farbschicht überlagert werden.

8. Verfahren nach Anspruch 6,
**dadurch gekennzeichnet,**
**dass** jedes Markierungsmuster im Laserfeld durch dieselbe geometrische Referenz markiert wird, die bei der Markierung des ersten Musters markiert wurde.

9. Verfahren nach einem der vorhergehenden Ansprüche,
**dadurch gekennzeichnet,**
**dass** man, da das Pigment der Sol-Gel-Schicht dieser eine spezifische Anfangsfärbung verleiht, die Laserstrahlung um die Oberfläche der Innenseite in einem vorbestimmten Abstand fokussiert, um einen Teil der Schicht so zu entfernen, dass das Muster zum Vorschein kommt.

10. Verfahren nach einem der vorhergehenden Ansprüche,
**dadurch gekennzeichnet,**
**dass** die Laserstrahlung um die Innenseite in einem vorbestimmten Abstand fokussiert wird, um das Sol-Gel an der Stelle gemäß dem gewünschten Muster oder den gewünschten Mustern zu brennen und zu fixieren, und dass der nicht gebrannte Überschuss um das Muster oder die Muster herum entfernt wird.

11. Verfahren nach einem der vorhergehenden Ansprüche,
**dadurch gekennzeichnet,**
**dass** sich der Laser außerhalb des Behälters befindet, der sich in Bezug auf den Behälter dreht und/oder horizontal und/oder vertikal bewegt, um die Teile des Flakons, die das Muster aufweisen sollen, freizulegen.

12. Verfahren nach einem der vorhergehenden Ansprüche,
**dadurch gekennzeichnet,**
**dass** man die Strahlung kontinuierlich und/oder diskontinuierlich steuert, um die Elemente des Musters oder der Muster erscheinen zu lassen oder nicht erscheinen zu lassen.

13. Verfahren nach einem der vorhergehenden Ansprüche,
**dadurch gekennzeichnet,**
**dass** man gleichzeitig mehrere Wände des Behälters mit derselben UV-Strahlung markiert.

14. Verfahren nach Anspruch 13,
**dadurch gekennzeichnet,**
**dass** mindestens zwei Wände des Behälters gleichzeitig markiert werden, wobei mindestens eine der Wände durch Ätzen des Glases markiert wird und mindestens eine andere Wand durch Wechselwirkung zwischen der Sol-Gel-Schicht und der UV-Laserstrahlung markiert wird, so dass das Muster einen dreidimensionalen Effekt erhält.

15. Vorrichtung zur Dekoration eines Flakons, umfassend den Flakon, der mit einer Innenwand versehen ist, die mit einem pigmentierten Sol-Gel-Produkt beschichtet ist, ein Werkzeug zum Tragen des Flakons, Mittel zum Drehen des Flakons und UV-Lasermittel (42) außerhalb des Flakons, die angeordnet sind, um einen UV-Laserstrahl auf eine Optik (44) zu richten, die eine lange Brennweite umfassen, die eine Schärfentiefe von mehr als 1 mm bei +/- 20% erlaubt, sowie Mittel (36, 39, 40, 45) zur Berechnung und Programmierung, die so beschaffen sind, dass sie in einem Abstand von einer Innenseite (46, 47) des Behälters auf programmierte Weise fokussieren und ein Muster auf der Innenseite des Flakons erscheinen lassen, der zuvor mit einem pigmentierten Sol-Gel-Produkt beschichtet wurde.

16. Behälter aus Glas oder Kunststoff mit mindestens einer Innenseite,
die eine Sol-Gel-Innenbeschichtung umfasst, die mit einem Muster mit dem Verfahren nach einem der Ansprüche 1 bis 14 markiert ist,
**dadurch gekennzeichnet,**
**dass** es eine Markierung umfasst, die gleichzeitig durch denselben Laserstrahl auf und/oder in zwei gegenüberliegenden Innenseiten, die zuvor mit Sol-Gelbeschichtet wurden, und/oder auf und/oder in der Oberfläche einer Wand und ihrer mit Sol-Gel beschichteten Innenseite erzielt wird.

## Claims

1. Process for treating at least one inner face (B, C; 5) of a container (R, F, 6, 13, 50), wherein said inner face is internally covered, at least in part, with a sol-gel layer, and said layer is treated by laser radiation (1), **characterized in that**, said layer being a pigmented layer (12) that reacts to laser radiation (1), the sol-gel layer is applied (step 11) by spraying or stamping said layer on a precise defined zone arranged to contain a pattern and the pattern is developed by interaction between the sol-gel and UV laser radiation specifically programmed as a function of said pattern to be revealed, the UV laser radiation being emitted by a device comprising an optic with a long focal distance allowing a depth of field of greater than 1 mm ± 20%.

2. Process according to Claim 1, **characterized in that** the covering layer is applied by spraying, by means of a nozzle (26) vibrating and/or oscillating about a displacement direction of the nozzle in the bottle (6, 13, 50).

3. Process according to either one of the preceding claims, **characterized in that** the UV radiation is focused at a non-zero distance from the inner face to be marked.

4. Process according to any one of the preceding claims, **characterized in that** the optical device comprises a flat-field focusing lens (44).

5. Process according to any one of the preceding claims, **characterized in that** at least two spots (3, 4) of different colours are applied, which are arranged to enable the creation of a pattern having at least two colours.

6. Process according to any one of the preceding claims, **characterized in that** several marking patterns are superimposed on one another, on one and the same face, including a first pattern.

7. Process according to Claim 6, **characterized in that** the superimposing is carried out by at least one repetition of a step of applying a coloured layer and of a step of removing a pattern in said coloured layer.

8. Process according to Claim 6, **characterized in that** each marking pattern is located in the laser field by one and the same geometric reference marked during the marking of the first pattern.

9. Process according to any one of the claims, **characterized in that**, the pigment of the sol-gel layer imparting thereto a specific initial colouration, the laser radiation is focused around the surface of the inner face at a specific distance in order to remove a portion of said layer so as to reveal said pattern.

10. Process according to any one of the claims, **characterized in that** the laser radiation is focused around the inner face at a predetermined distance in order to cure and fix the sol-gel at the location according to the desired pattern(s) and the uncured excess around the pattern(s) is removed.

11. Process according to any one of the preceding claims, **characterized in that** the laser is located outside of the container which rotates and/or is moved horizontally and/or vertically in connection with the latter to expose the bottle portions intended to exhibit said pattern.

12. Process according to any one of the preceding claims, **characterized in that** the radiation is controlled continuously and/or discontinuously in order to optionally reveal the elements of the pattern(s).

13. Process according to any one of the preceding claims, **characterized in that** several walls of the container are marked simultaneously with one and the same UV radiation.

14. Process according to Claim 13, **characterized in that** at least two walls of the container are marked simultaneously, at least one of the walls of which is marked by etching of the glass and at least one other wall of which is marked by interaction between the sol-gel layer and the UV laser radiation so as to give the pattern a three-dimensional effect.

15. Device for decorating a bottle comprising said bottle provided with an inner wall coated with a pigmented sol-gel product, a support tool for the bottle, means for rotating the bottle, and UV laser means (42) external to the bottle, arranged in order to direct a UV laser beam comprising an optic (44) with a long focal distance allowing a depth of field of greater than 1 mm ± 20% and computing and programming means (36, 39, 40, 45) arranged to focus at a distance from an inner face (46, 47) of said container in a programmed manner, and to reveal a pattern on said inner face of the bottle precoated with a pigmented sol-gel product.

16. Glass or plastic container having at least one inner face comprising a sol-gel internal coating marked with a pattern with the process according to any one of Claims 1 to 14, **characterized in that** it comprises a marking obtained simultaneously by the same laser beam on and/or in two opposite inner faces precoated with sol-gel and/or on and/or in the surface of a wall and the inner face thereof coated with sol-gel.
